# EUROPEAN PATENT SPECIFICATION

(11) **EP 0 753 807 B1**
(45) Date of publication and mention of the grant of the patent: **15.01.2003**
(21) Application number: 95111027.9
(22) Date of filing: 14.07.1995
(51) Int. Cl.: G05F 1/56

(54) **Power supply**
Stromversorgung
Alimentation électrique

(43) Date of publication of application: 15.01.1997
(73) Proprietor: Hewlett-Packard Company, A Delaware Corporation, Palo Alto, CA 94304 (US)
(72) Inventor: Jansen, Arian, 38920 Crolles (FR)
(74) Representative: Squibbs, Robert Francis

(56) References cited:
- EP-A- 0 531 945
- DE-A- 4 224 202
- FR-A- 2 707 770
- US-A- 4 261 032
- RADIO FERNSEHEN ELEKTRONIK, vol. 40, no. 7, 1991 BERLIN DE, page 389 MICHAEL FRANKE 'Zero- Drop Spannungsregler'
- ELECTRONIC DESIGN, vol. 42, no. 5, 7 March 1994 HASBROUCK HEIGHTS, NEW JERSEY US, pages 45-49, FRANK GOODENOUGH 'TINY IC PLUS FET BUILDS "SUPER LDO" REGULATOR'
- ELEKTRONIK, vol. 40, no. 12, pages 96, 98-102, XP 000234722 WONG J 'SPANNUNGSREGLER MIT MINIMALER VERLUSTLEISTUNG OPTIMAL FUER ANWENDUNGEN IN BATTERIEBETRIEBENEN GERAETEN'

## Description

### Field of the Invention

The present invention relates to power supplies.

### Background of the Invention

In regulated power supplies for electronic equipment, the output regulation stage is generally supplied with a dc input voltage having a significant ripple component and it is the function of the output stage to produce a smoothed output at a voltage level set by a voltage reference (this voltage reference may either be explicit or implicit in the circuitry of the stage). The line voltage drop across the main regulation stage, and thus the power dissipated in the stage, depends on the difference between the voltage reference and the instantaneous input voltage. This power dissipation can be substantial.

Linear regulators using active regulation devices are well known. In such a regulator, the active regulation device is located in the input-output path and is controlled by feedback to vary the voltage drop across it whereby to compensate for input voltage variations. RADIO FERNSEHEN ELEKTRONIK, vol.40, no. 7, 1991 BERLIN DE, page 389 MICHAEL FRANKE 'Zero-Drop-Spannungsregler' (D1) and ELECTRONIC DESIGN, vol.42, no. 5, 7 March 1994 HASBROUCK HEIGHTS, NEW JERSEY US, pages 45-49, FRANK GOODENOUGH 'TINY IC PLUS FET BUILDS "SUPER LDO" REGULATOR' (D2) describe linear regulators for regulating battery output to a fixed reference voltage. D1 is concerned with minimising quietscent power. ELEKTRONIK, vol. 40, no. 12, pages 96, 98-102, XP000234722 WONG, J. 'SPANNUNGSREGLER MIT MINIMALER VERLUSTLEISTUNG. OPTIMAL FÜR ANWENDUNGEN IN BATTERIEBETRIEBENEN GERÄTEN' (D3) also describes a linear regulator for regulating to a fixed reference voltage, the described regulator providing very low dropout voltage.

It is an object of the present invention to provide an arrangement permitting the power dissipation in an output regulation stage of a power supply to be minimised.

### Summary of the Invention

According to one aspect of the present invention, there is provided an electrical power supply with a regulation stage that comprises an input for receiving a dc input voltage with a significant ripple component, an output, an active regulation device having a regulation path connected in series between said input and output, and control means for controlling the active regulation device to regulate the voltage drop across its said regulation path,
characterised in that:
-- the regulation stage further comprises a minimum voltage detector for deriving and storing a minimum voltage measure indicative of a minimum of said dc input voltage, and
-- the control means is responsive to said minimum voltage measure stored by the minimum voltage detector to control the active regulation device such that the voltage drop across its regulation path substantially corresponds to the difference between the instantaneous value of the dc input voltage and said minimum of the dc input voltage as indicated by said minimum voltage measure, whereby the regulation stage provides at its output a dc output voltage at a level substantially equal to the dc input voltage value at the troughs of the ripple component.

In this way, the power dissipated in the stage is minimised. Of course, it will generally be required to regulate the dc output voltage to be at a particular level. To achieve this, the output voltage is compared to a reference to produce a control signal that is fed back to an upstream regulation stage, this upstream stage serving to vary the level of the trough voltage at the input of the downstream regulation stage.

Advantageously, the minimum voltage detector is connected to receive the dc output voltage and is operative to store a measure of a minimum of that voltage as the minimum voltage measure, the control means being operative to cause the active regulation device to have minimal voltage drop across its regulation path during periods when the input voltage is near its minimum.

In a preferred embodiment of the invention, the minimum voltage detector and the control means jointly comprise:
-- a capacitor connected in series with a resistor across the output of the regulation stage, the voltage across the capacitor serving as the minimum voltage measure and the voltage level at the junction of the capacitor and resistor (herein the junction voltage level) being indicative of the difference between the output voltage and the minimum voltage represented by the minimum voltage measure;
-- comparison means having an output and being responsive to the magnitude of the junction voltage level relative to a reference, to generate at its output the control signal such that:
   -- as the junction voltage level seeks to rise above said reference, the voltage drop across the regulation path of the active regulation device increases, and
   -- as the junction voltage level seeks to fall below said reference, the active regulation device is turned fully on to minimise the voltage drop across its regulation path; and
-- discharge means controlled by the comparison means to open a discharge path for the capacitor during periods when the junction voltage level seeks to fall below said reference whereby to permit the capacitor voltage to follow down the output voltage.

Advantageously, a zener diode is connected between the capacitor/resistor junction and the output of the comparison means, and the comparison means is operative when the junction voltage level seeks to fall below said reference to raise the level of the control signal until the zener diode conducts; in this arrangement, the zener diode serves as the discharge means and ensures a level of the control signal sufficient to cause the active regulation device to be fully on during periods when the junction voltage level seeks to fall below said reference.

According to another aspect of the present invention, there is provided an electrical power supply comprising:
-- a first regulation stage for producing in output an intermediate dc voltage with a significant ripple component, said first regulation stage being responsive to a control input fed thereto to vary the mean value of the intermediate dc voltage thereby to cause the level of the troughs of the ripple component to change,
-- a second regulation stage having an input and an output, the second regulation stage being connected to receive at its input the aforesaid intermediate dc voltage output by the first regulation stage and being operative to provide at its output a dc output voltage at a level having a fixed relation to the value of said intermediate dc voltage at the troughs of said ripple component, and
-- loop control means for comparing said dc output voltage produced by the second regulation stage with a reference, and for generating said control input such that the first regulation stage adjusts its mean value to a level causing said dc output voltage to settle at a level set by said reference.

### Brief Description of the Drawings

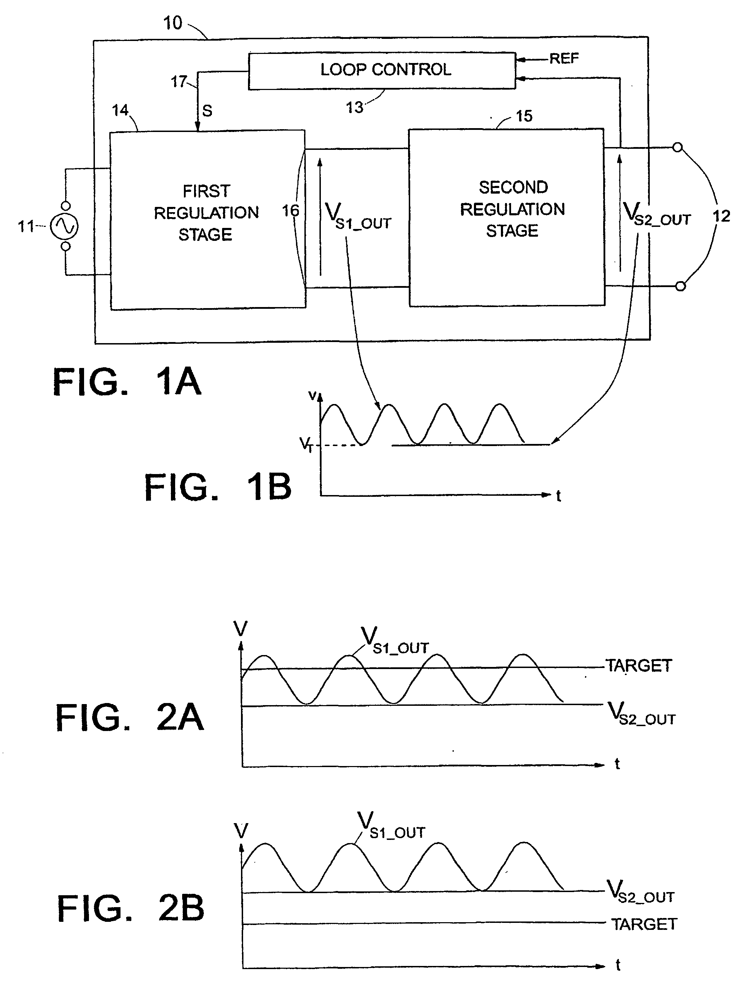

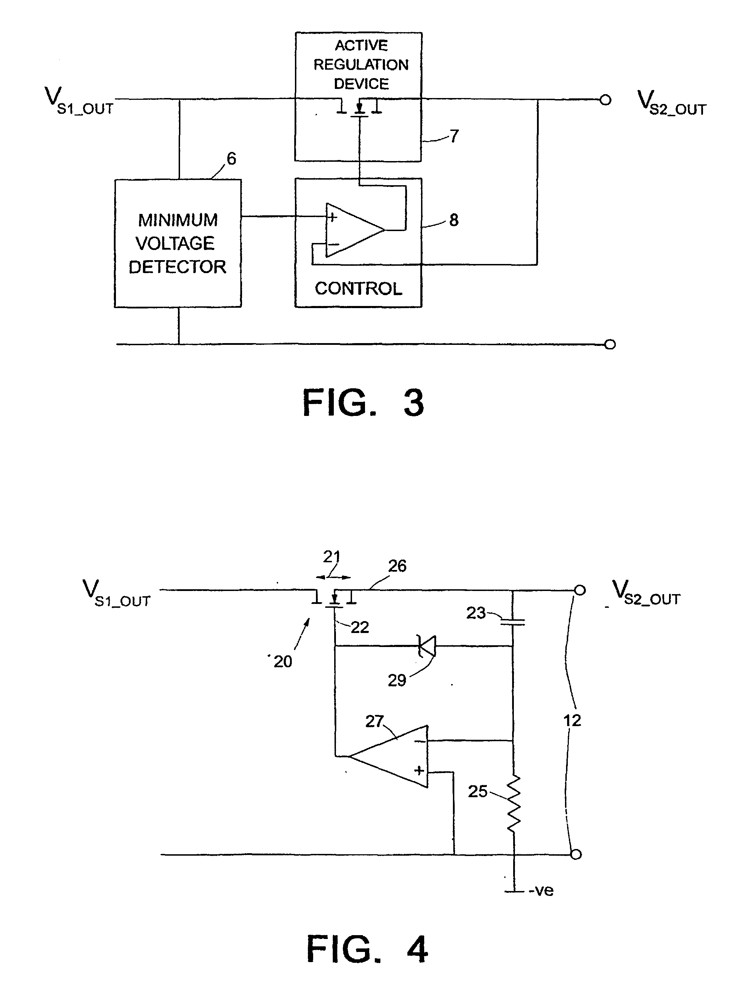

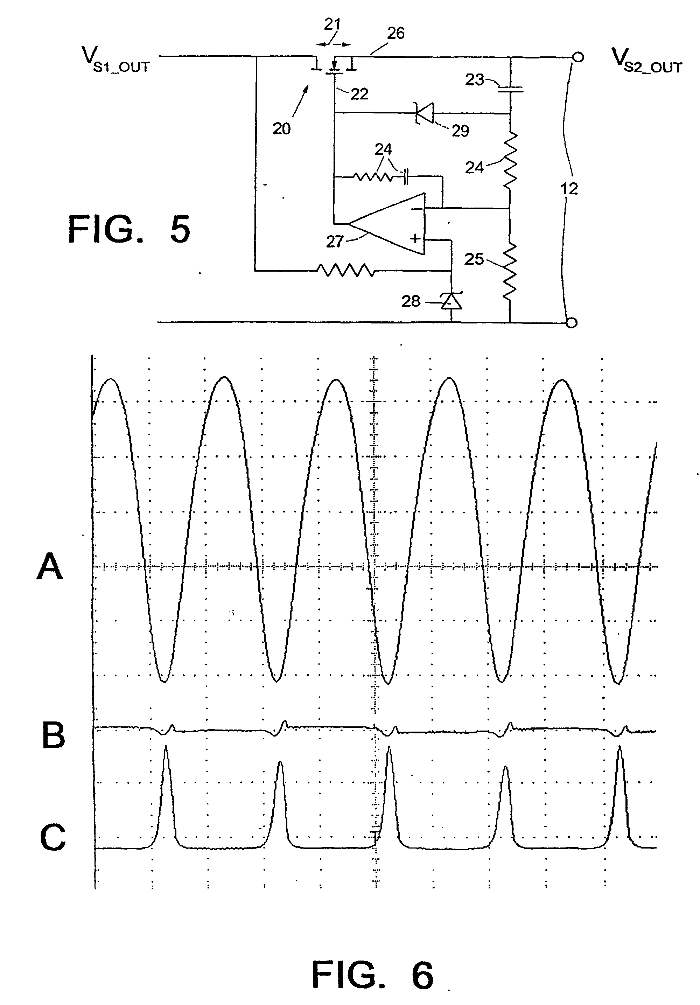

A power supply unit embodying the invention will now be described, by way of non-limiting example, with reference to the accompanying diagrammatic drawings, in which:
. **Figure 1A** is a block diagram of the power supply unit;
. **Figure 1B** is a voltage/time plot showing voltages existing at various points of the power supply unit;
. **Figure 2A** is a voltage/time plot showing the relation between input, output and target voltages of an output regulation stage of the Figure 1 power supply unit, in the case where the output voltage is too low;
. **Figure 2B** is a voltage/time plot showing the relation between input, output and target voltages of the output regulation stage of the Figure 1 power supply unit, in the case where the output voltage is too high;
. **Figure 3** is a block diagram showing the main functional components of the output regulation stage of the Figure 1 power supply unit;
. **Figure 4** is a circuit diagram of an embodiment of the Figure 3 block diagram;
. **Figure 5** is a circuit diagram of a more practical form of the Figure 4 circuit; and
. **Figure 6** are voltage/time plots for the Figure 5 circuit.

### Best Mode of Carrying Out the Invention

Figure 1A shows a power supply unit 10 connected on its input side to an ac.power source 11 and operative to output a regulated d.c. voltage at output terminals 12.

The power supply unit comprises a first regulation stage 14, a second regulation stage 15, and a loop control block 13.

The first regulation stage 14 is connected on its input side to the ac source 11 and produces at its output 16 an intermediate d.c voltage V_{S1_OUT} that has a significant ripple component (see Figure 1B). The mean d.c. voltage level of this intermediate voltage is controlled by a control signal S fed to the first stage 14 from the loop control block 13 on line 17.

The first regulation stage 14 is, for example, a switched-mode power supply with power factor correction, the control signal S serving to control the duty cycle of the switching device. Such a power supply stage is well known to persons skilled in the art and will therefore not be described in further detail herein.

The second regulation stage receives as input the intermediate voltage V_{S1_OUT} and produces at the output terminals 12 a smoothed d.c. voltage V_{S2_OUT}. The level of this voltage V_{S2_OUT} substantially corresponds to the value V_{T} of the intermediate voltage V_{S1_OUT} at the troughs of the ripple component of this voltage (see Figure 1B).

To control the level of the output voltage V_{S2_OUT}, this voltage is fed back to the loop control block 13 to which is also supplied a reference representative of the desired output voltage level at terminals 12. The loop control block 13 compares the fed-back voltage V_{S2_OUT} with the reference and sets the control signal S accordingly to effect any needed adjustment in the mean value of the intermediate voltage V_{S1_OUT} produced by the first regulation stage 14. Adjustment of this mean level will vary the trough voltage V_{T} of the intermediate voltage V_{S1_OUT} which in turn will vary the output voltage V_{S2_OUT} (since, as noted above, the second regulation stage causes the voltage V_{S2_OUT} to follow the trough voltage level V_{T} of the intermediate voltage V_{S1_OUT}).

Figure 2A illustrates the situation where the output voltage V_{S2_OUT} is below the target voltage TARGET represented by the reference fed to the loop control block 13. In this case the loop control block 13 sets the control signal in dependance on the difference between TARGET and V_{S2_OUT} to cause the first stage to increase the mean value of the intermediate voltage V_{S1_OUT}.

Figure 2B illustrates the situation where the output voltage V_{S2_OUT} is above the target voltage TARGET represented by the reference fed to the loop control block 13. In this case the loop control block 13 sets the control signal in dependance on the difference between TARGET and V_{S2_OUT} to cause the first stage to decrease the mean value of the intermediate voltage V_{S1_OUT}.

Details of the loop control block 13 are not given herein as it will be readily apparent to persons skilled in the art how block 13 may be implemented. It will, of course, be appreciated that the reference need not take the form of an explicit input to the control block but may be determined by the components of the block 13 itself.

Figure 3 is a block diagram showing the main functional blocks of the second regulation stage 15. These functional blocks are a minimum voltage detector 6 for capturing a measure of the minimum of the input voltage V_{S1_OUT} to the second stage, an active regulation device 7 connected in series between the input and output of the second stage, and a control block 8 for controlling the active regulation device in dependence on the difference between the minimum voltage measure captured by the minimum voltage detector 6 and a measure of the output voltage V_{S2_OUT}. By way of non-limiting illustration, the control block 8 is depicted as an error op amp and the active regulation device 7 as a MOSFET. The control block 8 on sensing movement of the output voltage V_{S2_OUT} above the captured minimum voltage, controls the active regulation device 7 to increase the voltage drop across the device 7 and so bring the output voltage back down towards the minimum voltage captured by detector 6.

The measures of the minimum voltage and of the output voltage V_{S2_OUT} can take any form provided they serve to indicate the values of the measured voltages.

Figure 4 shows a simplified version of a preferred embodiment of the second stage 15. In this case, a MOSFET 20 forms the active regulation device 7 of Figure 3 whilst an error amp 27 and a capacitor 23 form the main components of the control block 8 and the minimum voltage detector 6 respectively. In fact, as will become clearer below, the functions of the control block 8 and minimum voltage detector are to a degree merged in the Figure 4 circuit. With regard to detection of the minimum of the input voltage V_{S1_OUT}, in the Figure 4 circuit this is done by monitoring the output voltage V_{S2_OUT} rather than in the voltage V_{S1_OUT}. This is possible because, as will be more fully explained below, the MOSFET 20 is put into its fully on state with minimal voltage drop across its drain-source regulation path 21 when the output voltage is near its minimum and this results in the minimum of the input voltage V_{S1_OUT} being passed through to the output where it is captured by the minimum voltage detector.

As already noted, the minimum voltage detector comprises the capacitor 23 which in the Figure 4 is connected in series with a resistor 25 between the positive output line 26 and a negative bias voltage. In this embodiment, the capacitor 23 is arranged to capture and store a voltage equal to the minimum voltage appearing on the positive output line 26. The voltage at the junction of capacitor 23 and resistor 25 then corresponds to the difference between the captured minimum voltage and the actual voltage on the positive output line 26; this voltage should ideally be zero volts and for the major part of the cycle of the ripple wareform on the input voltage V_{S1_OUT}, it is the job of the op amp 27 to adjust the voltage on the gate 22 of the MOSFET 20 to so regulate the voltage drop across the drain-source regulation path 21, that the voltage at the junction of capacitor 23 and resistor 25 is brought back to zero. In other words, as the voltage on the positive output line 26 seeks to follow the input voltage ripple and rise above the input voltage minimum, the voltage at the junction of capacitor 23 and resistor 25 will also try to rise, immediately causing a decrease in gate voltage. This results in an increase in the drain-source voltage drop across the MOSFET with the consequence that the voltage V_{S2_OUT} on line 26 is held down towards the minimum voltage held by capacitor 23.

This regulation of V_{S2_OUT} continues for the majority of each cycle of the input ripple waveform, that is, for the portion of the cycle for which the voltage on line 26 is seeking to move above the captured minimum voltage. During this cycle portion, the capacitor voltage will increase slightly as the capacitor 23 charges up slowly.

As the input voltage, in following its ripple component, approaches its minimum, there comes a stage when the voltage on line 26 starts to fall below the voltage held on capacitor 23 thereby causing the voltage at the junction of capacitor 23 and resistor 25 to move below zero. As a result, the op amp drives the MOSFET gate voltage high resulting in the MOSFET being fully on thereby ensuring that the minimum of the input voltage V_{S1_OUT} is passed through to line 26. The output level of the op amp during this period is set by a zener diode 29 that is connected between the junction of the capacitor 23 and resistor 25 and the op amp output - the level of the op amp output rises until the zener diode 29 conducts to bring the voltage at the junction of capacitor 23 and resistor 25 back up to zero. The value of the zener diode 29 is chosen such that the gate voltage of MOSFET is sufficiently high to ensure that MOSFET is fully on.

Conduction of the zener diode 29 also ensures that the capacitor 23 can readily discharge so that the voltage across it will follow down the voltage on line 26 to the minimum of the input voltage as passed through MOSFET 20.

When the input voltage V_{S1_OUT} starts to move up again, taking with it the voltage on line 26, the voltage at the junction of capacitor 23 and resistor 25 starts to go positive which results in the MOSFET being once again regulated by op amp 27 to keep the voltage V_{S2_OUT} on line 26 approximately equal to the voltage across capacitor 23. Operation of the Figure 4 circuit then continues in the manner already described.

Figure 5 shows a more practical form of the Figure 4 circuit. In this case, the need for a negative bias voltage has been avoided by applying a positive reference voltage (provided by zener diode 28) to the non-inverting input of op amp 27. A consequence of this is that the voltage captured across the capacitor 23, whilst still being a measure of the minimum voltage of the input V_{S1_OUT}, is not equal to that voltage (being instead that voltage reduced by the reference voltage value of zener 28). Also in the Figure 5 circuit, components 24 have been added for stability reasons as will be appreciated by persons skilled in the art.

Figure 6 illustrates typical voltage/time wareform traces for the Figure 5 circuit. The upper trace A shows the ripple component of the second-stage input voltage V_{S1_OUT}. The middle trace B shows on the same scale as trace A, the second-stage output voltage V_{S2_OUT}. The perturbations in V_{S2_OUT} correspond to the period when MOSFET is fully on. The lower trace C, which is to a different scale to traces A and B, shows the voltage applied to the gate 22 of the MOSFET, the peaks of this trace corresponding to the fully-on periods of the MOSFET.

It will be appreciated that many variants of the second regulation stage are possible. For example, one possible implementation (though not preferred) of the minimum voltage detector would be to rapidly sample the voltages V_{S1_OUT}, V_{S2_OUT} and produce digital measures for processing by a separate processor to generate a control signal for the active regulation device. Furthermore, the active regulation device can be a bipolar power transistor rather than a MOSFET and a controllable zener diode could be used in Figure 5 to replace the zener 28 and op amp 27.

Although in the above-described example the second stage 15 maintains its output voltage substantially at the level of the trough voltage V_{T}, it would also be possible to arrange for the output voltage to be in some fixed relationship to the trough voltage (for example, one volt less). However, it is preferred that this fixed relationship is substantially one of equality as this minimises the power dissipation in the second regulation stage 15.

Whilst the ripple component of the input voltage V_{S1_OUT} to the second stage has been shown as sinusoidal, it will be appreciated that this ripple component may have a different time-varying form.

## Claims

1. An electrical power supply with a regulation stage (15) that comprises an input for receiving a dc input voltage (V_{S1-OUT}) with a significant ripple component, an output (12), an active regulation device (7;21) having a regulation path connected in series between said input and output, and control means (8;27) for controlling the active regulation device to regulate the voltage drop across its said regulation path,
**characterised in that**:
-- the regulation stage (15) further comprises a minimum voltage detector (8;27) for deriving and storing a minimum voltage measure indicative of a minimum of said dc input voltage (V_{S1-OUT}), and
-- the control means (8;27) is responsive to said minimum voltage measure stored by the minimum voltage detector (8;23) to control the active regulation device (7;23) such that the voltage drop across its regulation path substantially corresponds to the difference between the instantaneous value of the dc input voltage and said minimum of the dc input voltage as indicated by said minimum voltage measure, whereby the regulation stage provides at its output a dc output voltage (V_{S2-OUT}) at a level substantially equal to the dc input voltage value at the troughs of the ripple component.

2. An electrical power supply according to claim 1, wherein said minimum voltage detector (23) is connected to receive said dc output voltage (V_{S2-OUT}) and is operative to store a measure of a minimum of that voltage as said minimum voltage measure, said control means (27) being operative to cause the active regulation device (21) to have minimal voltage drop across its regulation path during periods when the input voltage is near its minimum.

3. An electrical power supply according to claim 2, wherein said minimum voltage detector and said control means jointly comprise:
-- a capacitor (23) connected in series with a resistor (25) across the output of the regulation stage (21), the voltage across the capacitor (23) serving as said minimum voltage measure and the voltage level at the junction of the capacitor (23) and resistor (25) (herein the junction voltage level) being indicative of the difference between the output voltage and the minimum voltage represented by said minimum voltage measure;
-- comparison means (27) having an output and being responsive to the magnitude of said junction voltage level relative to a reference, to generate at its output said control signal such that:
-- as the junction voltage level seeks to rise above said reference, the voltage drop across the regulation path of the active regulation device (21) increases, and
-- as the junction voltage level seeks to fall below said reference, the active regulation device is turned fully on to minimise the voltage drop across its regulation path; and
-- discharge means (29) controlled by the comparison means (27) to open a discharge path for the capacitor (23) during periods when the junction voltage level seeks to fall below said reference whereby to permit the capacitor voltage to follow down said output voltage.

4. An electrical power supply according to claim 3, wherein a zener diode (diode) (29) is connected between the capacitor/resistor junction and the output of the comparison means (27), the comparison means (27) being operative when the junction voltage level seeks to fall below said reference to raise the level of said control signal until the zener diode (29) conducts, the zener diode (29) serving as said discharge means and ensuring a level of said control signal sufficient to cause the active regulation device (21) to be fully on during periods when the junction voltage level seeks to fall below said reference.

5. An electrical power supply according to any one of claims 1 to 4, in which said regulation stage (15) constitutes a downstream regulation stage of the power supply, the power supply further comprising:
-- an upstream regulation stage (14) for producing in output an intermediate dc voltage (V_{S1-OUT}) with a significant ripple component, this intermediate dc voltage being fed to the input of the downstream regulation stage (15) to provide the dc input voltage of that stage, the upstream regulation stage (14) being responsive to a control input (5) fed thereto to vary the mean value of said intermediate dc voltage whereby to vary the level of the troughs of the ripple component of the intermediate dc voltage, and
-- loop control means (13) for comparing said dc output voltage (V_{S2-OUT}) produced by said downstream regulation stage (15) with a reference (REF), and for generating said control input (5) such that said upstream regulation stage (14) adjusts its mean value to a level causing said dc output voltage (V_{S2-OUT}) to settle at a level set by said reference.

## Patentansprüche

1. Eine elektrische Leistungsversorgung mit einer Regelstufe (15), die einen Eingang zum Empfangen einer Eingangsgleichspannung (V_{S1-OUT}) mit einer wesentlichen Welligkeitskomponente, einen Ausgang (12), eine aktive Regelvorrichtung (7; 21) mit einem Regelweg, der in Reihe zwischen den Eingang und den Ausgang geschaltet ist, und eine Steuereinrichtung (8; 27) zum Steuern der aktiven Regelvorrichtung umfaßt, um den Spannungsabfall über den Regelweg derselben zu regeln,
**dadurch gekennzeichnet, daß**
- die Regelstufe (15) ferner einen Minimalspannungsdetektor (8; 27) zum Ableiten und Speichern eines Minimalspannungsmaßes umfaßt, das ein Minimum der Eingangsgleichspannung (V_{S1-OUT}) anzeigt, und
- die Steuereinrichtung (8; 27) auf das Minimalspannungsmaß anspricht, das durch den Minimalspannungsdetektor (8; 23) gespeichert wird, um die aktive Regelvorrichtung (7; 23) zu steuern, so daß der Spannungsabfall über den Regelweg derselben im wesentlichen der Differenz zwischen dem Momentanwert der Eingangsgleichspannung und dem Minimum der Eingangsgleichspannung, wie es durch das Minimalspannungsmaß angezeigt wird, entspricht, wodurch die Regelstufe an ihrem Ausgang eine Ausgangsgleichspannung (V_{S2-OUT}) bei einem Pegel liefert, der im wesentlichen gleich ist wie der Eingangsgleichspannungswert an den Mulden der Welligkeitskomponente.

2. Eine elektrische Leistungsversorgung gemäß Anspruch 1, bei der der Minimalspannungsdetektor (23) verbunden ist, um die Ausgangsgleichspannung (V_{S2-OUT}) zu empfangen, und wirksam ist, um ein Maß eines Minimums dieser Spannung als das Minimalspannungsmaß zu speichern, wobei die Steuereinrichtung (27) wirksam ist, um zu bewirken, daß die aktive Regelvorrichtung (21) einen Minimalspannungsabfall über den Regelweg derselben aufweist, während Perioden, wenn die Eingangsspannung in der Nähe des Minimums ist.

3. Eine elektrische Leistungsversorgung gemäß Anspruch 2, bei der der Minimalspannungsdetektor und die Steuereinrichtung gemeinsam folgende Merkmale umfassen:
- einen Kondensator (23), der in Reihe mit einem Widerstand (25) über den Ausgang der Regelstufe (21) geschaltet ist, wobei die Spannung über den Kondensator (23) als Minimalspannungsmaß dient, und der Spannungspegel an der Verbindung zwischen Kondensator (23) und Widerstand (25) (hierin der Verbindungsspannungspegel) die Differenz zwischen der Ausgangsspannung und der Minimalspannung anzeigt, die durch das Minimalspannungsmaß dargestellt wird;
- eine Vergleichseinrichtung (27), die einen Ausgang aufweist und auf die Größe des Verbindungsspannungspegels bezüglich einer Referenz anspricht, um an ihrem Ausgang das Steuersignal zu erzeugen, so daß:
- wenn der Verbindungsspannungspegel versucht, über die Referenz anzusteigen, der Spannungsabfall über den Regelweg der aktiven Regelvorrichtung (21) ansteigt, und
- wenn der Verbindungsspannungspegel versucht, unter die Referenz zu fallen, die aktive Regelvorrichtung vollständig eingeschaltet wird, um den Spannungsabfall über den Regelweg derselben zu minimieren; und
- eine Entladungseinrichtung (29), die durch die Vergleichseinrichtung (27) gesteuert wird, um einen Entladungsweg für den Kondensator (23) zu öffnen, während Perioden, wenn der Verbindungsspannungspegel versucht, unter die Referenz zu fallen, wodurch ermöglicht wird, daß die Kondensatorspannung der Ausgangsspannung nach unten folgt.

4. Eine elektrische Leistungsversorgung gemäß Anspruch 3, bei der eine Zenerdiode (Diode) (29) zwischen die Kondensator/Widerstandsverbindung und den Ausgang der Vergleichseinrichtung (27) geschaltet ist, wobei die Vergleichseinrichtung (27) wirksam ist, wenn der Verbindungsspannungspegel versucht, unter die Referenz zu fallen, um den Pegel des Steuersignals zu erhöhen, bis die Zenerdiode (29) leitet, wobei die Zenerdiode (29) als die Entladungseinrichtung dient und einen Pegel des Steuersignals sicherstellt, der ausreicht, um zu bewirken, daß die aktive Regelvorrichtung (21) während Perioden, wenn der Verbindungsspannungspegel unter die Referenz fallen möchte, vollständig eingeschaltet ist.

5. Eine elektrische Leistungsversorgung gemäß einem der Ansprüche 1 bis 4, bei der die Regelstufe (15) eine nachgeschaltete Regelstufe der Leistungsversorgung bildet, wobei die Leistungsversorgung ferner folgende Merkmale umfaßt:
- eine vorgeschaltete Regelstufe (14) zum Erzeugen einer Zwischengleichspannung (V_{S1-OUT}) mit einer wesentlichen Welligkeitskomponente an einem Ausgang, wobei diese Zwischengleichspannung in den Eingang der nachgeschalteten Regelstufe (15) eingespeist wird, um die Eingangsgleichspannung dieser Stufe zu liefern, wobei die vorgeschaltete Regelstufe (14) auf ein Steuereingangssignal (5), das derselben zugeführt wird, anspricht, um den Mittelwert der Zwischengleichspannung zu variieren, um dadurch den Pegel der Mulden der Welligkeitskomponente der Zwischengleichspannung zu variieren, und
- eine Schleifensteuereinrichtung (13) zum Vergleichen der Ausgangsgleichspannung (V_{S2-OUT}), die durch die nachgeschaltete Regelstufe (15) erzeugt wird, mit einer Referenz (REF), und zum Erzeugen des Steuereingangssignals (5), so daß die vorgeschaltete Regelstufe (14) ihren Mittelwert auf einen Pegel einstellt, der bewirkt, daß sich die Ausgangsgleichspannung (V_{S2-OUT}) auf einen Pegel einstellt, der durch die Referenz eingestellt ist.

## Revendications

1. Alimentation d'énergie électrique avec un étage de régulation (15) qui comprend une entrée pour recevoir une tension d'entrée CC (V_{S1-OUT}) avec une composante d'ondulation importante, une sortie (12), un dispositif de régulation actif (7 ; 21) ayant un chemin de régulation connecté en série entre lesdites entrée et sortie, et des moyens de contrôle (8 ; 27) pour contrôler le dispositif de régulation active afin de réguler la chute de tension sur ledit chemin de régulation,
**caractérisée en ce que** :
- l'étage de régulation (15) comprend en outre un détecteur de tension minimum (8 ; 27) pour prélever et enregistrer une mesure de tension minimum indicative d'un minimum de la dite tension d'entrée CC (V_{S1-OUT}), et
- le moyen de contrôle (8 ; 27) réagit à ladite mesure de tension minimum enregistrée par le détecteur de tension minimum (8 ; 23) pour contrôler le dispositif de régulation active (7 ; 23), de sorte que la chute de tension sur son chemin de régulation correspond sensiblement à la différence entre la valeur instantanée de la tension d'entrée CC et ledit minimum de la tension d'entrée CC tel qu'indiqué par ladite mesure de tension minimum, moyennant quoi l'étage de régulation fournit à sa sortie une tension de sortie CC (V_{S2-OUT}) à un niveau sensiblement égal à la valeur de tension d'entrée aux valeurs minimales de la composante d'ondulation.

2. Alimentation d'énergie électrique selon la revendication 1, dans laquelle ledit détecteur de tension minimum (23) est connecté pour recevoir ladite tension de sortie CC (V_{S2-OUT}) et est opératoire pour mémoriser une mesure d'un minimum de cette tension comme dite mesure de tension minimum, lesdits moyens de contrôle (27) étant opératoires pour amener le dispositif de régulation actif (21) à avoir une chute de tension minimum sur son chemin de régulation pendant les périodes où la tension d'entrée est proche de son minimum.

3. Alimentation d'énergie électrique selon la revendication 2, dans laquelle ledit détecteur de tension minimum et lesdits moyens de contrôle comprennent conjointement :
- un condensateur (23) connecté en série avec une résistance (25) sur la sortie de l'étage de régulation (21), la tension sur le condensateur (23) servant de dite mesure de tension minimum et le niveau de tension à la jonction du condensateur (23) et de la résistance (25) (ici le niveau de tension de jonction) indiquant la différence entre la tension de sortie et la tension minimum représentée par ladite mesure de tension minimum ;
- des moyens de comparaison (27) ayant une sortie et répondant à l'amplitude dudit niveau de tension de jonction par rapport à une référence, pour générer à sa sortie ledit signal de contrôla de sorte que :
- lorsque le niveau de tension de jonction cherche à s'élever au-dessus de ladite référence, la chute de tension sur le chemin de régulation du dispositif de régulation actif (21) augmente, et
- lorsque le niveau de tension de jonction cherche à descendre au-dessous de ladite référence, le dispositif de régulation est activé au maximum pour minimiser la chute de tension sur son chemin de régulation ; et
- des moyens de décharge (29) contrôlés par le moyen de comparaison (27) pour ouvrir un chemin de décharge pour le condensateur (23) pendant les périodes où le niveau de tension de jonction cherche à descendre au-dessous de ladite référence pour permettre ainsi à la tension du condensateur de suivre ladite tension de sortie.

4. Alimentation d'énergie électrique selon la revendication 3, dans laquelle une diode Zener (diode) (29) est connectée entre la jonction condensateur/résistance et la sortie des moyens de comparaison (27), les moyens de comparaison (27) étant opératoires lorsque le niveau de tension de jonction cherche à tomber au-dessous de ladite référence pour élever le niveau dudit signal de contrôle jusqu'à ce que la diode Zener (29) conduise, la diode Zener (29) servant de dit moyen de décharge et assurant un niveau dudit signal de contrôle suffisant pour amener le dispositif de régulation actif (21) à être totalement activé pendant les périodes où le niveau de tension de jonction cherche à descendre au-dessous de ladite référence.

5. Alimentation d'énergie électrique selon l'une quelconque des revendications 1 à 4, dans laquelle ledit étage de régulation (15) constitue un étage de régulation en aval de l'alimentation électrique, cette alimentation électrique comprenant en outre :
- un étage de régulation en amont (14) pour produire en sortie une tension CC intermédiaire (V_{S1-OUT}) avec une composante d'ondulation importante, cette tension CC intermédiaire étant injectée dans l'entrée de l'étage de régulation en aval (15) pour fournir la tension d'entrée CC de cet étage, l'étage de régulation en amont (14) répondant à une entrée de contrôle (5) qui y est injectée pour faire varier la valeur moyenne de ladite tension CC intermédiaire et ainsi faire varier le niveau des minimums de la composante d'ondulation de la tension CC intermédiaire, et
- des moyens de contrôle en boucle (13) pour comparer ladite tension de sortie (V_{S2-OUT}) produite par ledit étage de régulation en aval (15) avec une référence (REF), et pour générer ladite entrée de contrôle (5) de sorte que ledit étage de régulation en amont (14) ajuste sa valeur moyenne à un niveau amenant la tension de sortie (V_{S2-OUT}) à se stabiliser à un niveau défini par ladite référence.
